# EUROPEAN PATENT APPLICATION

(11) **EP 3 358 700 A1**
(43) Date of publication of application: **08.08.2018**
(21) Application number: 18150728.6
(22) Date of filing: 09.01.2018
(51) Int. Cl.: H02J 7/00, G09G 3/00, H01F 38/14, H02J 50/10, H02J 50/12, H02J 50/50

(54) **DISPLAY SYSTEM, WIRELESS POWER TRANSMISSION APPARATUS, AND WIRELESS POWER RECEPTION APPARATUS**

(30) Priority: 01.02.2017 KR 20170014491
(71) Applicant: Samsung Electronics Co., Ltd., Gyeonggi-do 16677 (KR)
(72) Inventor: CHOI, Young-ho, Gyeonggi-do (KR); LIM, Sang-min, Gyeonggi-do (KR); LEE, Kyu-sung, Gyeonggi-do (KR)
(74) Representative: Appleyard Lees IP LLP

(57) **Abstract**

A display system, a wireless power transmission apparatus, and a wireless power reception apparatus are provided. The display system includes a wireless power transmission apparatus, a wireless power reception apparatus, and a display apparatus configured to receive power from the wireless power reception apparatus, wherein the wireless power transmission apparatus includes a first coil and a second coil of a closed loop arranged above the first coil and configured to apply power to the first coil to generate a magnetic field in a direction toward the wireless power reception apparatus, and wherein, in response to the generated magnetic field being applied to the wireless power reception apparatus, the wireless power reception apparatus is configured to generate power using a coil of a multilayer structure into which a plurality of insulators is inserted and to transmit the generated power to the display apparatus.

## Description

### CROSS-REFERENCE TO RELATED APPLICATION

This application claims priority from Korean Patent Application No. 10-2017-0014491, filed on February 1, 2017 in the Korean Intellectual Property Office, the disclosure of which is incorporated herein by reference in its entirety.

### BACKGROUND

### Field

Apparatuses and methods consistent with one or more exemplary embodiments relate to a display system, a wireless power transmission apparatus, and a wireless power reception apparatus, and more particularly, to a display system, a wireless power transmission apparatus, and a wireless power reception apparatus, for wirelessly transmitting and receiving power without an adverse effect on a design.

### Description of the Related Art

To effectively use a living space, the number of users that desire a display apparatus in the form of a wall-mountable television (TV) has increased. Most wall-mountable TVs are positioned on an upper wall spaced apart from a table and, thus, a problem occurs in that power wires are exposed.

To overcome this problem, a wireless power transmission method has been discussed. When a coil with a wide width is implemented as a reception apparatus, power is advantageously transmitted. However, in consideration of recent trends in which a display apparatus has become more slim, a problem occurs in that it is not possible to position a coil with a wide width in the display apparatus.

Accordingly, there is a need for a method of embodying a wireless power transmitting and receiving system that is appropriate for a design of a display system and does not use a separate additional device.

### SUMMARY

One or more exemplary embodiments overcome the above disadvantages and other disadvantages not described above. Also, an exemplary embodiment is not required to overcome the disadvantages described above, and an exemplary embodiment may not overcome any of the problems described above.

Aspects of one or more exemplary embodiments provide a display system, a wireless power transmission apparatus, and a wireless power reception apparatus, for implementing a shape of an optimum wireless power transmission and reception apparatus while preventing a design of a display system from being adversely affected.

According to an aspect of an exemplary embodiment, there is provided a display system including: a wireless power transmission apparatus; a wireless power reception apparatus; and a display apparatus configured to receive power from the wireless power reception apparatus, wherein the wireless power transmission apparatus includes a first coil and a second coil of a closed loop arranged above the first coil and configured to apply power to the first coil to generate a magnetic field in a direction toward the wireless power reception apparatus; and wherein, in response to the generated magnetic field being applied to the wireless power reception apparatus, the wireless power reception apparatus is configured to generate power using a coil of a multilayer structure into which a plurality of insulators is inserted and to transmit the generated power to the display apparatus.

According to an aspect of another exemplary embodiment, there is provided a wireless power transmission apparatus including: a transmission antenna; and a power supply configured to supply power to the transmission antenna, wherein the transmission antenna includes: a magnetic core; a first coil above the magnetic core and configured to generate a magnetic field in response to current from the power supply being applied to the first coil; and a second coil including two closed-loop conducting wires spaced apart above the first coil and wound at right and left portions in different directions, and configured to at least one of amplify and focus the magnetic field generated by the first coil.

The first coil may include conducting wires arranged separately to a right and a left of a central axis on one plane and respectively wound in different directions relative to the central axis.

The magnetic core may include a plurality of magnetic substances arranged in a direction perpendicular to a central axis direction of the first coil and in a direction toward the second coil.

The first coil may be a single conducting wire arranged in a dual spiral form that is wound around two virtual points spaced apart on a plane.

The first coil may be a single conducting wire including a first region arranged in a dual spiral form wound around two virtual points spaced apart on a first plane and a second region on a second plane perpendicular and adjacent to the plane.

The second coil may be a closed loop arranged in a dual spiral form wound around two virtual points spaced apart on a plane or is a closed loop arranged in a dual helical form wound around the two virtual points spaced apart on the plane.

The wireless power transmission apparatus may further include: a speaker; and a communicator configured to receive an audio signal to be output from the speaker.

According to an aspect of another exemplary embodiment, there is provided a wireless power reception apparatus including: a reception antenna; and a power supply configured to externally transmit power generated by the reception antenna, wherein the reception antenna includes: a coil arranged to configure a multilayer structure and configured to generate current in response to a magnetic field being applied to the coil; a plurality of insulators inserted between each layer of the multilayer structure of the coil; and a magnetic core including a protrusion inserted into a center of the coil.

Each layer included in the multilayer structure of the coil may include a conducting wire wound in a dual spiral form around two virtual points spaced apart on a plane; and a conducting wire wound in a dual spiral form of a layer, of the multilayer structure, may be connected in series to a conducting wire wound in a dual spiral form of a next layer, of the multilayer structure.

The wireless power reception apparatus may further include a capacitor connected in series to the conducting wire in the dual spiral form.

The magnetic core may have a bar shape with a length that is 10 times a width or a thickness of the magnetic core.

The magnetic core may further include an outer portion surrounding the coil.

The wireless power reception apparatus may further include: a speaker; a communicator configured to receive a plurality of audio signals; and a processor configured to output at least one of the plurality of received audio signals from the speaker and to transmit at least one remaining audio signal of the plurality of received audio signals to an external device.

The wireless power transmission apparatus may be a woofer or subwoofer, and the wireless power reception apparatus may be a speaker.

The first coil may include conducting wires arranged separately to a right and a left of a central axis on one plane and respectively wound in different directions relative to the central axis.

The wireless power transmission apparatus may further include a magnetic core including one or more magnetic substances arranged in a direction perpendicular to a central axis direction of the first coil and in a direction toward the second coil.

The first coil may be a single conducting wire arranged in a dual spiral form that is wound around two virtual points spaced apart on a plane.

Each layer included in the multilayer structure of the coil may include a conducting wire wound in a dual spiral form around two virtual points spaced apart on a plane; and a conducting wire wound in a dual spiral form of a layer, of the multilayer structure, may be connected in series to a conducting wire wound in a dual spiral form of a next layer, of the multilayer structure.

The wireless power reception apparatus may further include a magnetic core that has a bar shape.

According to aspects of one or more exemplary embodiments, a wall-mountable display system may be installed without exposed power wires and power may be wirelessly transmitted and received while minimizing a leakage magnetic field of front and rear sides.

Additional and/or other aspects and advantages will be set forth in part in the description which follows and, in part, will be obvious from the description, or may be learned by practice of one or more exemplary embodiments.

### BRIEF DESCRIPTION OF THE DRAWINGS

The above and/or other aspects will be more apparent by describing certain exemplary embodiments with reference to the accompanying drawings, in which:
FIG. 1 is a diagram showing a display system according to an exemplary embodiment;
FIG. 2 is a block diagram for explanation of a configuration of a wireless power transmission apparatus according to an exemplary embodiment;
FIG. 3 is a block diagram for explanation of a configuration of a wireless power transmission antenna according to an exemplary embodiment;
FIGS. 4 to 7 are diagrams showing a structure and combination of coils according to one or more exemplary embodiments;
FIGS. 8A to 8D are graphs showing impedance characteristics of a wireless power transmission antenna according to various exemplary embodiments;
FIGS. 9A and 9B show simulation results of transfer characteristics of mutual magnetic lines between a wireless power transmission apparatus and a wireless power reception apparatus according to various exemplary embodiments;
FIG. 10 is a block diagram for explanation of a configuration of a wireless power reception apparatus according to an exemplary embodiment;
FIG. 11 is a block diagram for explanation of a configuration of a wireless power reception antenna according to an exemplary embodiment; and
FIGS. 12 to 14 are diagram of a configuration of a wireless power reception antenna according to one or more exemplary embodiments.

### DETAILED DESCRIPTION OF EXEMPLARY EMBODIMENTS

Certain exemplary embodiments will now be described in greater detail with reference to the accompanying drawings. In the following description, a detailed description of known functions and configurations incorporated herein will be omitted when it may make the subject matter of the present disclosure unclear. The terms used in the specification are defined in consideration of functions used in the present disclosure, and can be changed according to the intent or typically used methods of clients, operators, and users. Accordingly, definitions of the terms should be understood on the basis of the entire description of the present specification.

It will be understood that, although the terms first, second, third, etc., may be used herein to describe various elements, these elements should not be limited by these terms. These terms are only used to distinguish one element from another element. For example, a first element may be termed a second element and a second element may be termed a first element without departing from the teachings of the present disclosure. As used herein, the term "and/or" includes any and all combinations of one or more of the associated listed items. Additionally, expressions such as "at least one of," when preceding a list of elements, modify the entire list of elements and do not modify the individual elements of the list.

The terminology used herein is for the purpose of describing particular exemplary embodiments only and is not intended to be limiting of the inventive concept. As used herein, the singular forms "a," "an," and "the" are intended to include the plural forms as well, unless the context clearly indicates otherwise. It will be further understood that the terms "comprises" and/or "comprising" when used in this specification, specify the presence of stated features, integers, steps, operations, elements, and/or components, but do not preclude the presence or addition of one or more other features, integers, steps, operations, elements, components, and/or groups thereof.

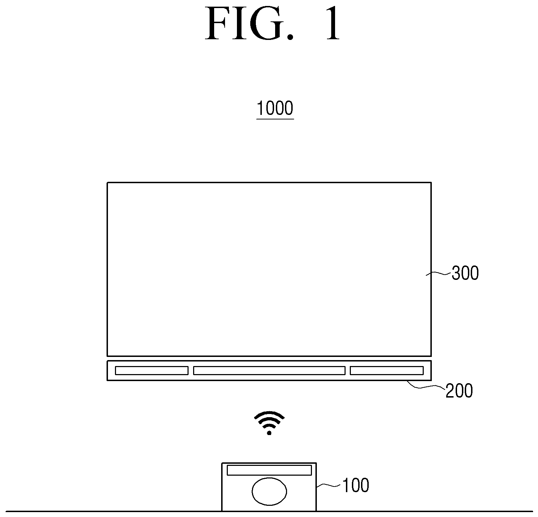

FIG. 1 is a diagram showing a display system 1000 according to an exemplary embodiment. According to the exemplary embodiment shown in FIG. 1, the display system 1000 may include a wireless power transmission apparatus 100, a wireless power reception apparatus 200, and a display apparatus 300 for receiving power from the wireless power reception apparatus 200. The display apparatus 300 may receive power from the wireless power reception apparatus 200 by wire.

For example, the wireless power transmission apparatus 100 may be implemented as a woofer and the wireless power reception apparatus 200 may be implemented as a sound bar. A wireless power transmitting and receiving system may be implemented using a typical sound system (such as a sound bar and woofer) and, thus, the display system 1000 according to an exemplary embodiment may provide a wireless power transmitting and receiving function without an additional apparatus.

For example, the wireless power transmission apparatus 100 and the wireless power reception apparatus 200 may be spaced apart from each other in a vertical direction. The wireless power transmission apparatus 100 may generate a magnetic field in a direction toward the wireless power reception apparatus 200. The wireless power reception apparatus 200 may be arranged on a lower end of the display apparatus 300. However, a position of the wireless power reception apparatus 200 is not limited thereto in one or more other exemplary embodiments. For example, the wireless power reception apparatus 200 according to another exemplary embodiment may be arranged on a rear surface of the display apparatus 300 so as not to be exposed or may be integrated in the display apparatus 300. The wireless power reception apparatus 200 implemented as a sound bar is arranged adjacently to the display apparatus 300 and, thus, the display system 1000 may provide spatial correspondence between an image and audio to a user. In addition, due to the adjacent arrangement, power wires between the wireless power reception apparatus 200 and the display apparatus 300 may not be visible to a user.

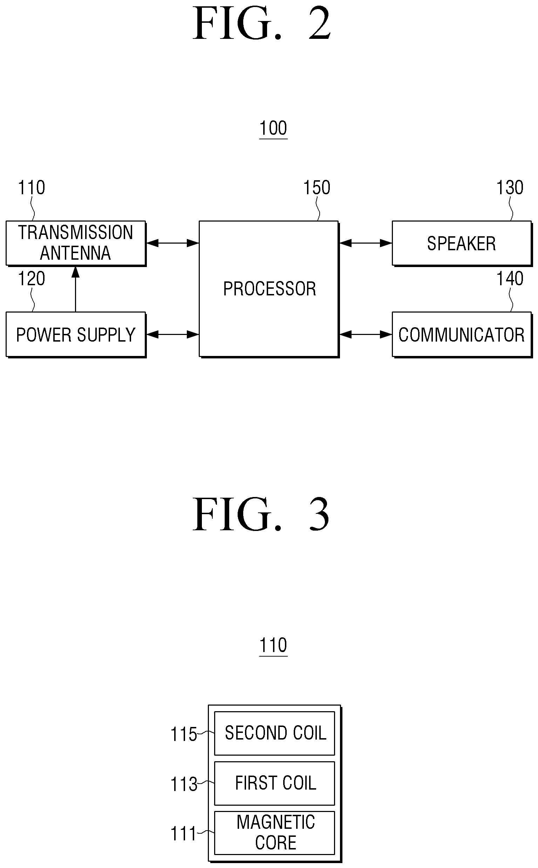

The wireless power transmission apparatus 100 may perform a wireless power transmitting function and may also function as a woofer for outputting a low frequency audio signal. The wireless power transmission apparatus 100 may include a first coil 113 (as shown in FIG. 3) that is connected to a power supply 120 and to which current is applied, and a second coil 115 (as shown in FIG. 3) that is arranged above the first coil 113 in the form of a closed loop. The wireless power transmission apparatus 100 may also include a magnetic core 111 positioned below the first coil 113. Here, the terms "above" and "below" may refer to a case relative to which the wireless power reception apparatus 200 is positioned above the wireless power transmission apparatus 100. That is, the case in which the second coil 115 is positioned above the first coil 113 may refer to the case in which the second coil 115 is positioned closer than the first coil 113b to the wireless power reception apparatus 200. Since a woofer that outputs a low frequency audio is generally positioned below a sound bar, the wireless power transmission apparatus 100 may be implemented as a woofer and the wireless power reception apparatus 200 may be implemented as a sound bar. Thus, a wireless power transmitting function may be provided to the user without a change to a typical speaker arrangement.

The wireless power transmission apparatus 100 may apply current to the first coil 113 to generate a magnetic field in a direction toward the wireless power reception apparatus 200. The second coil 115 may amplify and/or focus the magnetic field generated by the first coil 113. For example, the first coil 113 and the second coil 115 may be a dual-loop type coil.

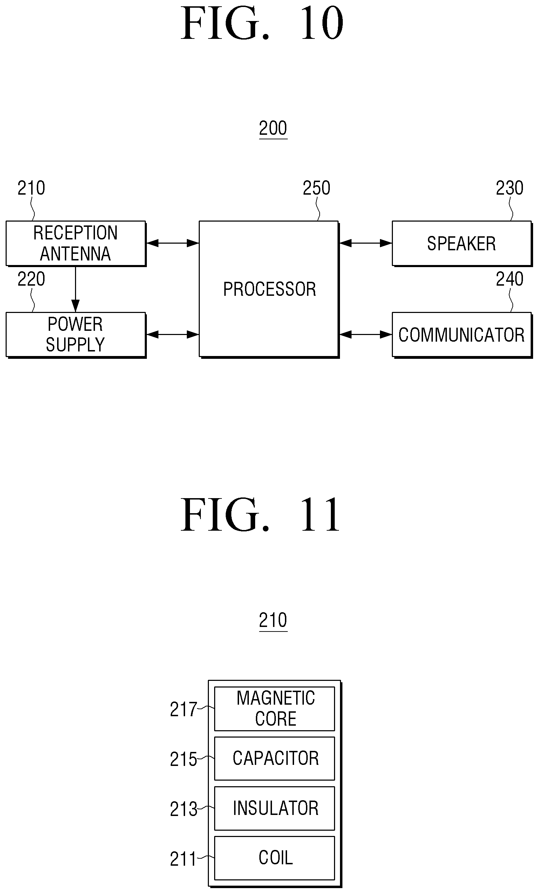

The wireless power reception apparatus 200 may perform a function of a wireless power reception apparatus as well as a function of outputting a voice or audio signal. The wireless power reception apparatus 200 may include a coil 211 (as shown in FIG. 11) with a multilayer structure into which a plurality of insulators 213 (as shown in FIG. 11) are inserted. The wound coils 211 and the insulators 213 may be alternately stacked. The wireless power reception apparatus 200 may include a magnetic core 217 (as shown in FIG. 11) including a protrusion inserted into a central portion of the coil 211 and an upper portion that covers an upper end of the coil 211.

In response to the magnetic field generated by the wireless power transmission apparatus 100 being applied to the wireless power reception apparatus 200, the wireless power reception apparatus 200 may generate power using the coil 211 with a multilayer structure and may transmit the generated power to the display apparatus 300. For example, the coil 211 may be a dipole coil implemented with a multilayer structure.

The display apparatus 300 may receive power from the wireless power reception apparatus 200. The display apparatus 300 may output a voice or audio signal using the wireless power transmission apparatus 100 implemented as a woofer and the wireless power reception apparatus 200 implemented as a sound bar.

Detailed configurations of the wireless power transmission apparatus 100 and the wireless power reception apparatus 200 will be described below with reference to the drawings.

FIG. 2 is a block diagram for explanation of a configuration of a wireless power transmission apparatus 100 according to an exemplary embodiment. Referring to FIG. 2, the wireless power transmission apparatus 100 may include a transmission antenna 110, a power supply 120, a speaker 130, a communicator 140, and a processor 150.

In response to current being applied to the transmission antenna 110, the transmission antenna 110 may generate a magnetic field. The transmission antenna 110 may be configured to generate a magnetic field in a direction toward the wireless power reception apparatus 200. According to an exemplary embodiment, the transmission antenna 110 may include the first coil 113 (as shown in FIG. 3) for generating a magnetic field in response to current being applied thereto and the second coil 115 (as shown in FIG. 3) for amplifying and/or focusing the magnetic field generated by the first coil 113. The transmission antenna 110 may also include the magnetic core 111 (as shown in FIG. 3). A detailed configuration of the transmission antenna 110 will be described below with reference to the drawings.

The power supply 120 may be connected to the transmission antenna 110 to supply power thereto. The power supply 120 may include a power supply for supplying direct current (DC) power, an inverter for converting the supplied DC power into alternating current (AC) power, and a driving integrated circuit (IC) for controlling power supply to the transmission antenna 110. As such, the power supply 120 may supply AC power to the transmission antenna 110.

The speaker 130 may output a voice or audio signal received by the wireless power reception apparatus 200. In particular, the speaker 130 may output a voice or audio signal of a low frequency component.

The communicator 140 may communicate with an external device. For example, the communicator 140 may receive a voice or audio signal to be output by the speaker 130, from the wireless power reception apparatus 200.

The processor 150 may control the aforementioned components. For example, the processor 150 may control the power supply 120 to supply current to the transmission antenna 110. The processor 150 may control the communicator 140 to receive a voice signal from the wireless power reception apparatus 200 or the display apparatus 300. According to one or more exemplary embodiments, the processor 150 may refer to a single processor, may refer to multiple processing cores, and/or may refer to a plurality of processors.

FIG. 3 is a block diagram for explanation of a configuration of a wireless power transmission antenna 110 according to an exemplary embodiment. Referring to FIG. 3, the transmission antenna 110 may include the magnetic core 111, the first coil 113, and the second coil 115. The transmission antenna 110 may be implemented with a wide width like a form of the wireless power transmission apparatus 100 implemented as a woofer, or may have a width corresponding to at least a portion of a width of the wireless power transmission apparatus 100. The transmission antenna 110 may have a wide width and, thus, the first coil 113 and the second coil 115 of the transmission antenna 110 may be implemented with a dual loop coil.

The magnetic core 111 may be positioned below the first coil 113. Here, the term "below" may refer to an opposite direction relative to a direction toward a wireless power reception antenna 210. The magnetic core 111 may be used to increase transmitted magnetic flux.

The magnetic core 111 may be positioned in a direction perpendicular to a direction of a central axis of the first coil 113 and a direction toward the reception antenna 210. The central axis of the first coil 113 may refer to a central portion of a plane of the first coil 113 with a dual spiral structure and at which conducting wires with current flowing in the same direction are gathered. The central axis direction may refer to a direction of current flowing in a conducting wire of a central portion.

For example, assuming that an upper direction (i.e., a direction toward the reception antenna 210) is a z-axis direction and a central axis direction of the first coil 113 is an x-axis direction, a longitudinal direction of the magnetic core 111 may be a y-axis direction.

The magnetic core 111 may prevent a magnetic field from leaking toward a lower portion of the wireless power transmission apparatus 100 and may allow the magnetic field to be longitudinally emitted toward an upper portion of the wireless power transmission apparatus 100.

The first coil 113 may be arranged above the magnetic core 111 and below the second coil 115. In response to current being applied to a conducting wire of the first coil 113 from the power supply 120, a magnetic field may be generated in the first coil 113.

The first coil 113 may include conducting wires that are wound in different directions based on a central axis on one plane. Since the conducting wires are wound in different directions, current may be applied in the same direction to a power wire at a central axis portion. The magnetic field generated by the power wire at the central axis portion may configure lines of magnetic force to surround the power wire at the central portion. As the magnetic field is transmitted along the magnetic core 111, the lines of magnetic force may extend in an upward direction.

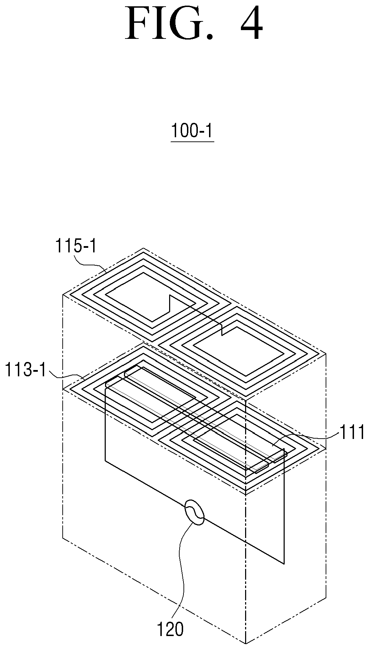

The first coil 113 may be implemented in two forms. For example, a first form of a first coil 113-1 (as shown in FIG. 4) may be a single conducting wire arranged in a dual spiral form that is wound around two virtual points spaced apart from each other on the same plane. Conducting wires are arranged to allow current in the same direction at a central axis portion to which two spirals are adjacent and, thus, the first coil 113 may generate a magnetic field in a direction to surround entire conducting wires of the central axis portion. Current flows in an opposite direction to the central axis portion at an outer portion of each of the dual spirals and, thus, a magnetic field in a direction that offsets a magnetic field generated at the central axis portion may be generated at an outer portion. By the shape of the first coil 113 and arrangement of the magnetic core 111, the transmission antenna 110 may transmit a magnetic field in an upward direction toward the reception antenna 210.

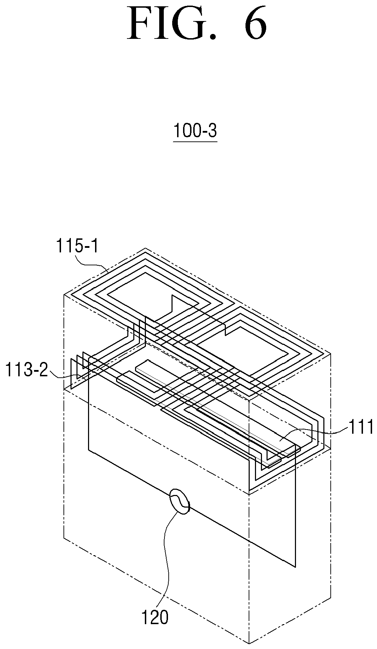

As another example, a second form of a first coil 113-2 (as shown in FIG. 6) may be arranged in such a way that a preset region of a single conducting wire arranged in a dual spiral form that is wound around two virtual points spaced apart from each other on the same plane is arranged on an adjacent vertical plane. That is, the second form of the first coil 113-2 may be formed by bending right and left portions of the first form of the first coil 113-1 downward. A magnetic field is also generated at a lower portion in a direction that offsets a magnetic field generated at the central axis portion. Thus, the second form of the first coil 113-2 may relatively effectively shield a magnetic field emitted toward a lower portion of the first coil 113, compared with the first form of the first coil 113-1.

The second coil 115 may be spaced apart an upper portion of the first coil 113. Unlike the first coil 113 connected to the power supply 120, the second coil 115 may be implemented with a closed loop. The second coil 115 may include two closed loop conducting wires that are wound in different directions at right and left sides. The second coil 115 may amplify and/or focus the magnetic field generated in the first coil 113. The first coil 113 that generates a magnetic field upon receiving current from the power supply 120 may be referred to as or implemented by an exciter. In addition, the second coil 115, which amplifies, transmits, and focuses the magnetic field generated in the first coil 113, may be referred to as or implemented by a repeater.

The second coil 115 may be implemented with two forms. For example, a first form of a second coil 115-1 (as shown in FIG. 4) may be a closed-loop conducting wire arranged in a dual spiral form that is wound around two virtual points spaced apart from each other on the same plane.

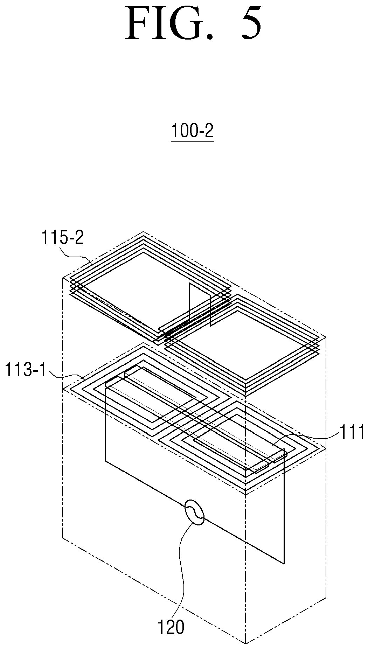

As another example, a second form of a second coil 115-2 (as shown in FIG. 5) may be a closed-loop conducting wire arranged in a dual helical form that is wound around two virtual points spaced apart from each other on the same plane.

As such, the transmission antenna 110 may be implemented in at least four forms by combinations of two forms of the first coil 113 and two forms of the second coil 115. FIGs. 4 to 7 are diagrams showing the wireless power transmission apparatus 100 including the transmission antenna 110 that is implemented in four forms.

Referring to FIG. 4, a wireless power transmission apparatus 100-1 according to an exemplary embodiment may include the first form of the first coil 113-1 and the first form of the second coil 115-1. The first coil 113-1 formed by winding a single conducting wire in a dual spiral form may be positioned above the magnetic core 111. Opposite ends of the single conducting wire included in the first coil 113-1 may be connected to the power supply 120 to receive current.

The first coil 113-1 is wound in a dual spiral form and, thus, a magnetic field that offsets a magnetic field at a central portion of the first coil 113-1 may be generated at right and left portions. The magnetic core 111 is arranged in a longitudinal direction toward the magnetic field generated at the central portion of the first coil 113-1 and, thus, the magnetic field generated in the first coil 113-1 may flow along the magnetic core 111. Accordingly, lines of magnetic force may be longitudinally configured in a direction upward the second coil 115-1.

The second coil 115-1 formed by winding a single conducting wire in a dual spiral form may be positioned above the first coil 113-1. Opposite ends of the single conducting wire included in the second coil 115-1 may be connected to each other to form a closed loop. The second coil 115-1 may transmit the magnetic field generated in the first coil 113-1 upward without leaking.

A magnetic field induced in the second coil 115-1 and a magnetic field induced in the first coil 113-1 may be combined to strengthen a magnetic field transmitted upward. In this case, magnetic fields generated in the first coil 113-1 and the second coil 115-1 may have the same phase. When the magnetic field generated in the first coil 113-1 passes through the second coil 115-1, current is generated in the second coil 115-1. In addition, a magnetic field may be re-generated by current generated in the second coil 115-1.

As such, a transmission antenna 110-1 has a dual coil structure including the first coil 113-1 and the second coil 115-1. Thus, a leakage magnetic field may be reduced and a magnetic field may be transmitted upward for a long distance as compared to a single coil structure.

Referring to FIG. 5, a wireless power transmission apparatus 100-2 according to an exemplary embodiment may include the first form of the first coil 113-1 and the second form of the second coil 115-2. The first coil 113-1 formed by winding a single conducting wire in a dual spiral form may be positioned above the magnetic core 111. Opposite ends of the single conducting wire included in the first coil 113-1 may be connected to the power supply 120 to receive current.

The second form of the second coil 115-2 may also reduce a leakage magnetic field and strengthen the magnetic field generated in the first coil 113 like the first form of the second coil 115-1 shown in FIG. 4. The second coil 115-2 may be formed by winding a single conducting wire in a dual helical form. Opposite ends of the single conducting wire included in the second coil 115-2 may be connected to each other to form a closed loop.

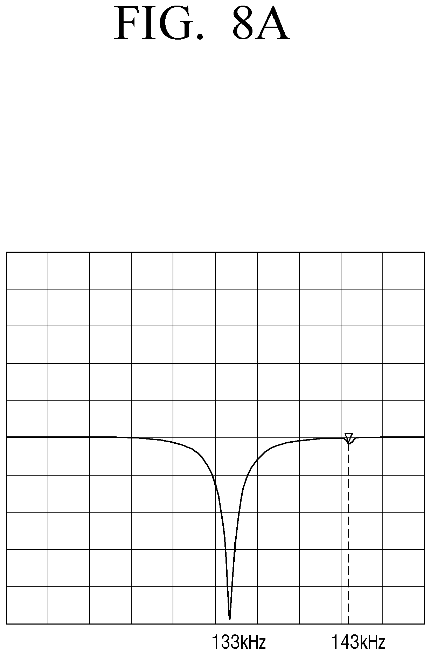

The second form of the second coil 115-2 having a dual helical structure positioned in a height direction has a small amount of leakage magnetic field and may be advantageous to transmit a magnetic field upward. Change in efficiency due to a structure difference of the second coil 115 will be re-described below with reference to FIGs. 8A to 8D.

Referring to FIG. 6, a wireless power transmission apparatus 100-3 according to an exemplary embodiment may include the second form of the first coil 113-2 and the first form of the second coil 115-1. The first coil 113-2 formed by winding a single conducting wire in a dual spiral form and bending a partial region downward may be positioned above the magnetic core 111. Opposite ends of the single conducting wire included in the first coil 113-2 may be connected to the power supply 120 to receive current.

A shape of the second form of the first coil 113-2 will be described with reference to a shape of the first form of the first coil 113-1. The second form of the first coil 113-2 may be formed by bending opposite lateral surfaces of the first form of the first coil 113-1 downward. A magnetic field of a direction, which offsets a magnetic field generated in a conducting wire at a central portion, is generated in a conducting wire at the opposite lateral surfaces bent downward and, thus, the second form of the first coil 113-2 may focus the magnetic field generated at the central portion upward. The second form of the first coil 113-2 may longitudinally form lines of magnetic force in right and left directions as compared to the first form of the first coil 113-1. Accordingly, the second form of the first coil 113-2 may also transmit a magnetic field upward for a long distance.

The second coil 115-1 formed by winding a single conducting wire in a dual spiral form may be positioned above the first coil 113-2. Opposite ends of the single conducting wire included in the second coil 115-1 may be connected to each other to form a closed loop.

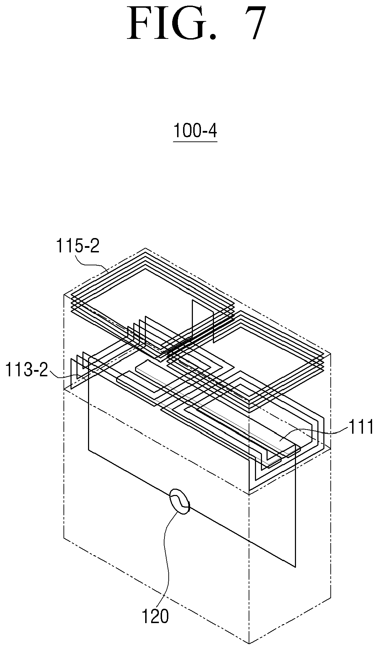

Referring to FIG. 7, a wireless power transmission apparatus 100-4 according to an exemplary embodiment may include the second form of the first coil 113-2 and the second form of the second coil 115-2. Details of a shape of each coil 113-2 and 115-2 correspond to above details of FIGS. 4 to 6 and, thus, will be omitted here.

FIGS. 8A to 8D are graphs showing impedance characteristics of the wireless power transmission antenna 110 according to various exemplary embodiments. FIGS. 8A to 8D show impedance characteristics of the wireless power transmission apparatuses 100-1, 100-2, 100-3, and 100-4 according to the four exemplary embodiments shown in FIGS. 4 to 7, respectively. In FIGS. 8A to 8D, the x axis is a frequency axis and the y axis is S11 impedance value. Impedance is reduced at a resonance frequency and, thus, a peak value may be seen to be lowered downward in the graph. When impedance of the transmission antenna 110 is measured, the transmission antenna 110 is coupled with the reception antenna 210 and, thus, a small peak value with lowered impedance may also be seen at a resonance frequency of the reception antenna 210. As impedance is greatly lowered at a resonance frequency of the reception antenna 210, a magnetic field generated by the transmission antenna 110 may be effectively transmitted to the reception antenna 210.

For impedance experiments of FIGS. 8A to 8D, a resonance frequency of the transmission antenna 110 may be set to 133 kHz and a resonance frequency of the reception antenna 210 may be set to 143 kHz. In the impedance characteristics of the wireless power transmission apparatuses 100-1, 100-2, 100-3, and 100-4 (e.g., woofers or subwoofers) including four transmission antennas 110 formed by differently combining the shapes of the first coil 113 and the second coil 115, as a changed absolute value at 143 kHz as a resonance frequency of the reception antenna 210 is increased, efficiency is further improved.

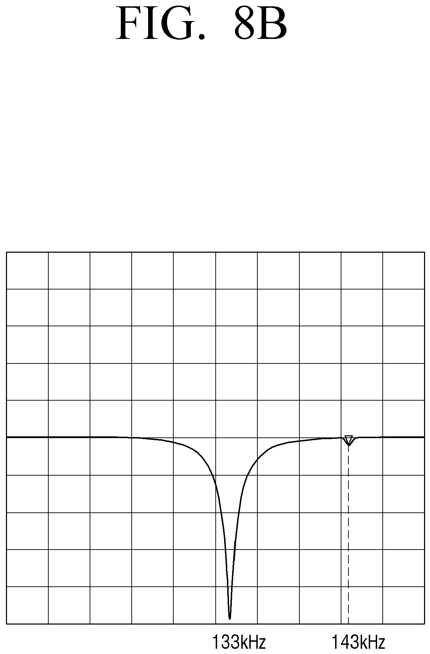

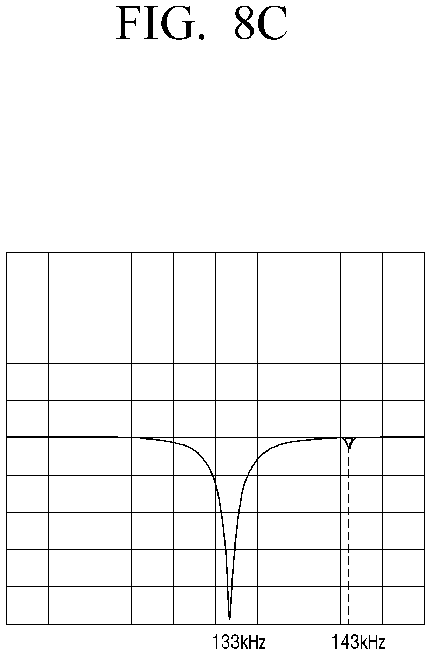

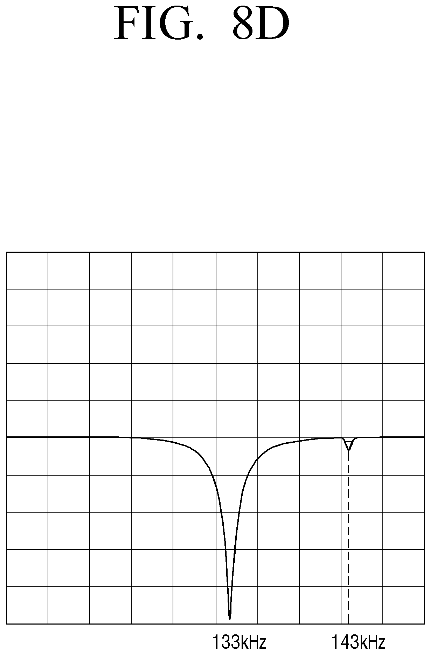

As an experiment result, an absolute value of impedance that is changed at a resonance frequency of the reception antenna 210 is measured to be increased at an order of FIGs. 8D, 8C, 8B, and 8A. That is, the wireless power transmission apparatus 100-4 including a combination of the second form of the first coil 113-2 and the second form of the second coil 115-2 is measured to have a highest efficiency. Through this result, to increase efficiency, first, the first coil 113 may be implemented in the second form and, then, the second coil 115 may also be implemented in the second form.

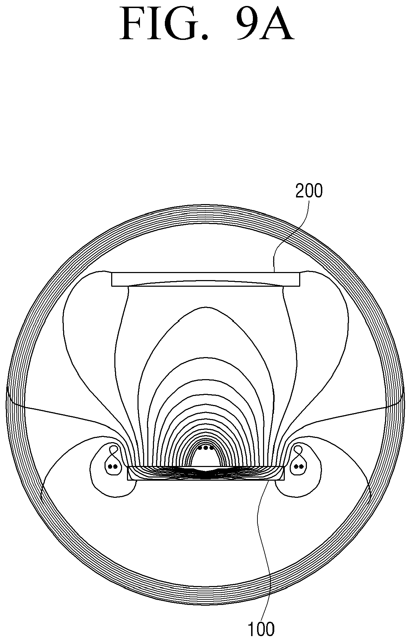

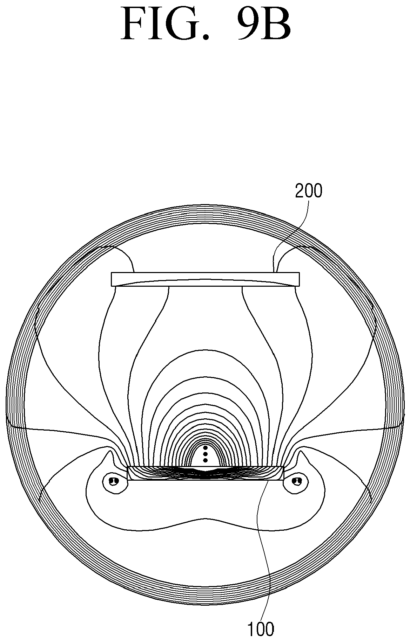

FIGS. 9A and 9B show simulation results of transfer characteristics of mutual magnetic lines between a wireless power transmission apparatus 100 and a wireless power reception apparatus 200 according to various exemplary embodiments. FIGS. 9A and 9B show the wireless power transmission apparatus 100 positioned at a lower end portion and the wireless power reception apparatus 200 positioned at an upper end portion.

FIG. 9A shows a simulation result of the wireless power transmission apparatus 100-1 including a transmission antenna obtained by combination of the first form of the first coil 113-1 and the first form of the second coil 115-1. FIG. 9B shows a simulation result of the wireless power transmission apparatus 100-4 including a transmission antenna obtained by combination of the second form of the first coil 113-2 and the second form of the second coil 115-2.

Points positioned at right and left points of the wireless power transmission apparatus 100 of FIG. 9A may be opposite lateral portions of the first form of the first coil 113-1. Points positioned at right and left points of the wireless power transmission apparatus 100 of FIG. 9B may be opposite lateral portions bent in a downward direction of the second form of the first coil 113-2. The points positioned at right and left points of FIG. 9B may be seen to be positioned below as compared to FIG. 9A. As compared to FIG. 9A, it may be seen that lines of magnetic force of FIG. 9B extend more longitudinally in right and left directions and upward. This is because, due to the magnetic field generated in opposite lateral portions bent in a downward direction of the first coil 113-2 shown in FIG. 9B, the magnetic field generated at a central portion of the first coil 113-2 is further focused upward.

Points positioned at right and left points of a central portion of the wireless power transmission apparatus 100 of FIG. 9A may be the first form of the second coil 115-1 and points positioned at upper and lower points of the central portion of the wireless power transmission apparatus 100 of 9B may be the second form of the second coil 115-2. It may be seen that a magnetic field is transmitted more upward in FIG. 9B in which the second coil 115-2 has the second form.

FIG. 10 is a block diagram for explanation of a configuration of a wireless power reception apparatus 200 according to an exemplary embodiment. Referring to FIG. 10, the wireless power reception apparatus 200 may include a reception antenna 210, a power supply 220, a speaker 230, a communicator 240, and a processor 250.

The reception antenna 210 may generate current in response to a magnetic field being applied to the reception antenna 210. The reception antenna 210 may be configured to pass a magnetic field transmitted in a direction of the transmission antenna 110 therethrough. The reception antenna 210 may be implemented like a bar with a narrow width and a great length due to a shape of the wireless power reception apparatus 200. For example, the reception antenna 210 may be implemented with a length that is 10 times a width or a thickness.

The reception antenna 210 according to an exemplary embodiment may include a coil 211 of a multilayer structure into which the plurality of insulators 213 is inserted, a capacitor 215 that is connected in series to the coil 211 of each layer, and a magnetic core 217 (as shown in FIG. 11). A detailed configuration of the reception antenna 210 will be described below with reference to the drawings.

The power supply 220 may supply power to an external device such as the display apparatus 300 using current generated by the reception antenna 210. The power supply 220 may include a rectifier to convert induced AC power into DC power.

The speaker 230 may output a voice or audio signal received by the display apparatus 300. For example, the speaker 230 may be arranged at right and left portions of the reception antenna 210 to output a voice or audio signal.

The communicator 240 may communicate with an external device. For example, the communicator 240 may receive a voice or audio signal to be output by the speaker 230, from the display apparatus 300.

The processor 250 may control the aforementioned components. For example, the processor 250 may control the power supply 220 to rectify current applied to the reception antenna 210 and to transmit the current to an external device. The processor 250 may control the speaker 230 to output some of a plurality of voice or audio signals received from the display apparatus 300 and may control the communicator 240 to transmit the remaining voice or audio signal to the wireless power transmission apparatus 100.

FIG. 11 is a block diagram for explanation of a configuration of a wireless power reception antenna 210 according to an exemplary embodiment. Referring to FIG. 11, the reception antenna 210 may include the coil 211, the insulator 213, the capacitor 215, and the magnetic core 217. The reception antenna 210 may be configured in a bar type corresponding to a shape of the wireless power reception apparatus 200 implemented with a sound bar. To implement the reception antenna 210 in a bar type, the coil 211 of the reception antenna 210 may be implemented as a dipole coil.

The coil 211 may be arranged to configure a multilayer structure. When the coil 211 is arranged on a single plane, a problem occurs in that a width is increased. When the width is increased, a problem occurs in that it is difficult to arrange the coil 211 in the wireless power reception apparatus 200 or the display apparatus 300 due to a shape of the wireless power reception apparatus 200 or the display apparatus 300. Accordingly, the reception antenna 210 according to an exemplary embodiment may include the coil 211 arranged or configured in a multilayer structure.

Each layer of the coil 211 may include a conducting wire that is wound around two virtual points spaced apart from each other on a plane in a dual spiral form. In addition, a conducting wire wound in a dual spiral form of one layer may be connected in series to a conducting wire wound in a dual spiral form of a next layer. For example, the conducting wire may have a dual spiral structure like the first form of the first coil 113-1 of the transmission antenna 110 but a single layer of the coil 211 may be longitudinally wound in a longitudinal direction.

When a resonance phenomenon occurs in the reception antenna 210, a voltage between opposite ends of a coil is increased and, thus, a problem may occur in that fire occurs due to dielectric breakdown. Accordingly, the insulator 213 may be inserted into a multilayer structure of the coil 211.

To lower a voltage between opposite ends of the coil 211, the capacitor 215 may be connected in series to opposite ends of the coil 211 of each layer. Capacitance of the capacitor 215 may be determined in consideration of a resonance frequency.

The magnetic core 217 may include a protrusion inserted into an empty space of a center of the coil 211 and an upper portion for covering an upper end of the coil 211. The magnetic core 217 may strengthen magnetic flux passing through the coil 211. The magnetic core 217 may be shaped like a bar that has a length 10 times greater than a width or a thickness.

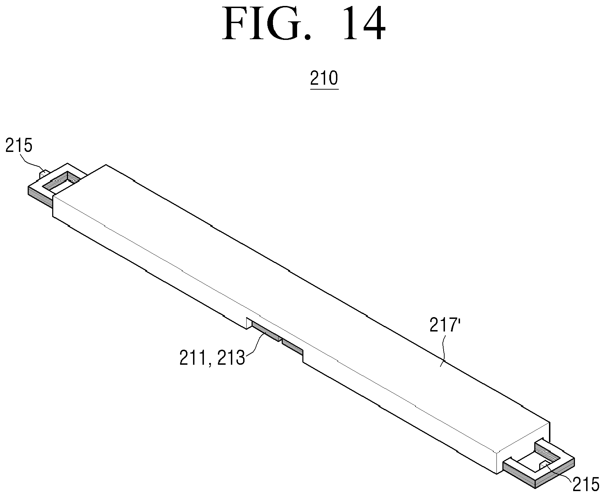

A magnetic core 217' according to another exemplary embodiment (such as shown in FIG. 14) may further include an outer portion that surrounds the coil 211. That is, the magnetic core 217' including the outer portion may has a shape formed by rotating 'E' to the right by 90 degrees viewed from the right and left.

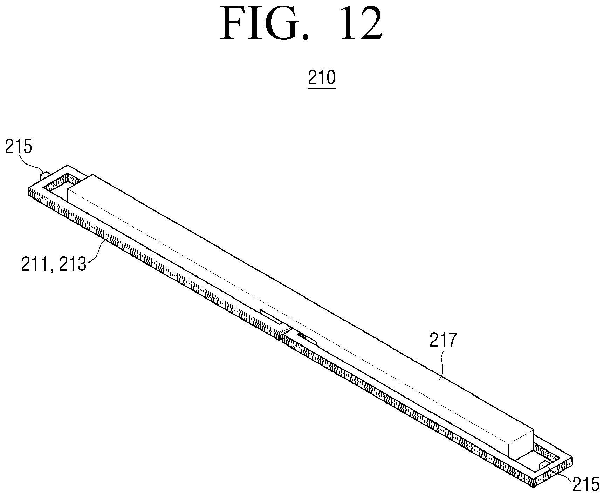

FIG. 12 is a diagram showing a structure of a wireless power reception antenna 210 according to an exemplary embodiment. FIG. 12 shows the case in which the coil 211 implemented with a multilayer structure and the insulator 213 are overlapped. In addition, an upper end of the magnetic core 217 may be arranged far away from the transmission antenna 110 as compared to the coil 211.

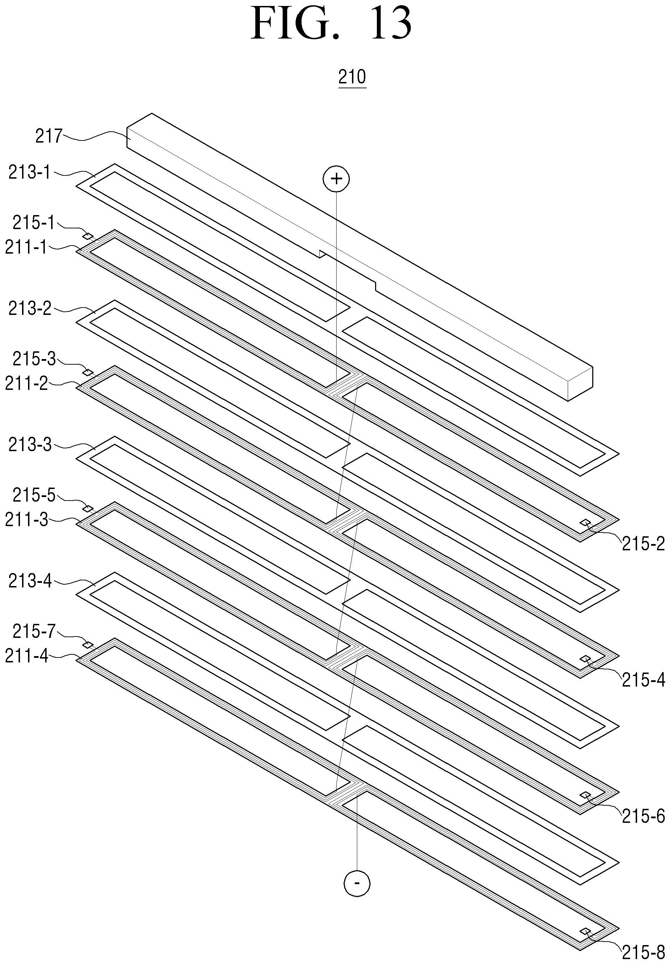

FIG. 13 is an exploded view of a multilayer structure of a reception antenna 210 according to an exemplary embodiment. The magnetic core 217 may be arranged below the reception antenna 210. A protrusion may be present below the magnetic core 217 and, thus, may be inserted into a core 211 with a dual spiral structure and an empty space of the insulator 213, which has the same shape as the core 211 and is inserted into layers of the core 211.

To function as a wireless power reception apparatus 200 while preventing a design of a speaker or device environment from being adversely affected, the wireless power reception apparatus 200 according to an exemplary embodiment may be configured in such as way that the coil 211 may be arranged to configure a multilayer structure. Since the coil 211 is arranged to configure a multilayer structure, a width of the reception antenna 210 may be reduced as compared to a single-layer structure.

Each of layers 211-1, 211-2, 211-3, and 211-4 of the coil 211 configuring a multilayer structure may include a conducting wire that is wound in a dual spiral form around two virtual points that are spaced apart from each other on a plane. In addition, the conducting wire that is wound in a dual spiral form of one layer may be connected to a conducting wire wound in a dual spiral form of a next layer. For example, an end point of a conducting wire 211-1 of a first layer may be connected in series to a start point of a conducting wire 211-2 of a second layer. A start point of the conducting wire 211-1 of the first layer and an end point of a last layer 211-4 may be connected to a rectifier of the power supply 220. In FIG. 13, the rectifier is connected in + and -.

In the case of a single structure, a conducting wire of the coil 211 is adjacent to a conducting wire of an immediately next turn and, thus, a covering of the conducting wires may sufficiently ensure a voltage difference. However, in the case of a multilayer structure, a conducting wire of the coil 211 may be adjacent to a conducting wire of a lower layer. For example, in the case of the coil 211 configured by winding a conducting wire 20 times in each layer (10 times in a left spiral and 10 times in a right spiral), a difference of 20 turns may be present between conducting wires of the first and second layers. As a difference in a turn number is increased, a voltage difference is increased and, thus, a method of reducing a voltage difference may be considered in the coil 211 implemented to configure a multilayer structure.

According to an exemplary embodiment, the insulator 213 may be inserted into layers of the coil 211. Accordingly, dielectric breakdown due to a voltage difference with a conducting wire of another layer may be prevented. In addition, the capacitor 215 may be connected in series to opposite ends of each layer of the coil 211. The capacitor 215 may reduce a high voltage of opposite ends of a coil, which may be generated during resonance.

FIG. 14 is a diagram showing a reception antenna 210 according to another exemplary embodiment. In FIG. 14, a shape of the magnetic core 217' may be different from the magnetic core 217 of the reception antenna 210 shown in FIG. 13. The magnetic core 217' according to the exemplary embodiment illustrated in FIG. 14 may further include an outer portion surrounding the coil 211. The outer portion is further included and, thus, the magnetic core 217' may reduce a magnetic field that leaks toward front and rear sides of the wireless power reception apparatus 200.

According to one or more exemplary embodiments, an optimum wireless power transmitting and receiving system may be implemented without a change in a design of the display system 1000.

According to one or more exemplary embodiments, in consideration of a location of an electricity outlet and a location of the display apparatus 300, the wireless power transmission apparatus 100 and the wireless power reception apparatus 200 may be implemented as a woofer (or subwoofer) and a sound bar, respectively. Accordingly, the display apparatus 300 may wirelessly receive power without an additional device.

According to an exemplary embodiment, the wireless power transmission apparatus 100 and the wireless power reception apparatus 200 may implement a transmission antenna and a reception antenna in the form of a dual coil form and a dipole coil of a multilayer structure in consideration of a woofer and a sound bar, respectively. Accordingly, an optimum wireless power transmitting and receiving system may be implemented without a change in design.

The foregoing exemplary embodiments and advantages are merely exemplary and are not to be construed as limiting the present disclosure. The present teaching can be readily applied to other types of apparatuses. Also, the description of exemplary embodiments is intended to be illustrative, and not to limit the scope of the claims, and many alternatives, modifications, and variations will be apparent to those skilled in the art.

## Claims

1. A display system comprising:
a wireless power transmission apparatus;
a wireless power reception apparatus; and
a display apparatus configured to receive power from the wireless power reception apparatus,
wherein the wireless power transmission apparatus comprises a first coil and a second coil of a closed loop arranged above the first coil and configured to apply power to the first coil to generate a magnetic field in a direction toward the wireless power reception apparatus; and
wherein, in response to the generated magnetic field being applied to the wireless power reception apparatus, the wireless power reception apparatus is configured to generate power using a coil of a multilayer structure into which a plurality of insulators is inserted and to transmit the generated power to the display apparatus.

2. A wireless power transmission apparatus comprising:
a transmission antenna; and
a power supply configured to supply power to the transmission antenna,
wherein the transmission antenna comprises:
a magnetic core;
a first coil above the magnetic core and configured to generate a magnetic field in response to current from the power supply being applied to the first coil; and
a second coil comprising two closed-loop conducting wires spaced apart above the first coil and wound at right and left portions in different directions, and configured to at least one of amplify and focus the magnetic field generated by the first coil.

3. The wireless power transmission apparatus as claimed in claim 2, wherein the first coil comprises conducting wires arranged separately to a right and a left of a central axis on one plane and respectively wound in different directions relative to the central axis.

4. The wireless power transmission apparatus as claimed in claim 2, wherein the magnetic core comprises a plurality of magnetic substances arranged in a direction perpendicular to a central axis direction of the first coil and in a direction toward the second coil.

5. The wireless power transmission apparatus as claimed in claim 2, wherein the first coil is a single conducting wire arranged in a dual spiral form that is wound around two virtual points spaced apart on a plane.

6. The wireless power transmission apparatus as claimed in claim 2, wherein the first coil is a single conducting wire comprising a first region arranged in a dual spiral form wound around two virtual points spaced apart on a first plane and a second region on a second plane perpendicular and adjacent to the plane.

7. The wireless power transmission apparatus as claimed in claim 2, wherein the second coil is a closed loop arranged in a dual spiral form wound around two virtual points spaced apart on a plane or is a closed loop arranged in a dual helical form wound around the two virtual points spaced apart on the plane.

8. The wireless power transmission apparatus as claimed in claim 2, further comprising:
a speaker; and
a communicator configured to receive an audio signal to be output from the speaker.

9. A wireless power reception apparatus comprising:
a reception antenna; and
a power supply configured to externally transmit power generated by the reception antenna,
wherein the reception antenna comprises:
a coil arranged to configure a multilayer structure and configured to generate current in response to a magnetic field being applied to the coil;
a plurality of insulators inserted between each layer of the multilayer structure of the coil; and
a magnetic core comprising a protrusion inserted into a center of the coil.

10. The wireless power reception apparatus as claimed in claim 9, wherein:
each layer included in the multilayer structure of the coil comprises a conducting wire wound in a dual spiral form around two virtual points spaced apart on a plane; and
a conducting wire wound in a dual spiral form of a layer, of the multilayer structure, is connected in series to a conducting wire wound in a dual spiral form of a next layer, of the multilayer structure.

11. The wireless power reception apparatus as claimed in claim 10, further comprising a capacitor connected in series to the conducting wire in the dual spiral form.

12. The wireless power reception apparatus as claimed in claim 9, wherein the magnetic core is has a bar shape with a length that is 10 times a width or a thickness of the magnetic core.

13. The wireless power reception apparatus as claimed in claim 9, wherein the magnetic core further comprises an outer portion surrounding the coil.

14. The wireless power reception apparatus as claimed in claim 9, further comprising:
a speaker;
a communicator configured to receive a plurality of audio signals; and
a processor configured to output at least one of the plurality of received audio signals from the speaker and to transmit at least one remaining audio signal of the plurality of received audio signals to an external device.

15. The display system as claimed in claim 1, wherein the wireless power transmission apparatus is a woofer or subwoofer, and the wireless power reception apparatus is a speaker.
